# EUROPEAN PATENT APPLICATION

(11) **EP 4 644 465 A1**
(43) Date of publication of application: **05.11.2025**
(21) Application number: 23910690.9
(22) Date of filing: 27.12.2023
(51) Int. Cl.: C08G 73/10, C07F 9/46

(54) **CATALYST FOR SYNTHESIS OF POLYIMIDE, PREPARATION METHOD THEREFOR AND USE THEREOF**

(30) Priority: 30.12.2022 CN 202211726304
(71) Applicant: BYD Company Limited, Shenzhen, Guangdong 518118 (CN)
(72) Inventor: DUAN, Pingping, Shenzhen, Guangdong 518118 (CN); HE, Junpeng, Shenzhen, Guangdong 518118 (CN); DING, Mingyue, Shenzhen, Guangdong 518118 (CN); WU, Hongsheng, Shenzhen, Guangdong 518118 (CN)
(74) Representative: Schott, Jakob Valentin
(86) International application number: PCT/CN2023/142248
(87) International publication number: WO 2024/140771

(57) **Abstract**

A catalyst for synthesizing polyimide. The structural formula of the catalyst is as shown in formula (I): 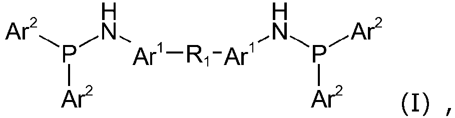 wherein Ar¹ and Ar² are independently selected from a substituted or unsubstituted aryl group or a substituted or unsubstituted heterocyclic aryl group, and R1 is oxygen, sulfur, sulfone, sulfoxide, carbonyl, secondary amine, alkylene, alkenylene, alkynylene, alicyclylene group, heteroarylene group, fused polycyclic arylene group or a single bond.

## Description

This application claims priority to the Chinese patent application filed with the China Patent Office on December 30, 2022, with application number 202211726304.7 and application name "Catalyst for synthesizing polyimide, preparation method and application thereof", the entire contents of which are incorporated by reference into this application.

### FIELD

The present application relates to the technical field of polyimide, and in particular to a catalyst for synthesizing polyimide and a preparation method and application thereof.

### BACKGROUND

Polyimide has excellent properties such as high mechanical properties, high and low temperature resistance, flame retardancy, and radiation resistance. It is widely used in national defense, military industry, microelectronics, vehicles, chemical industry and other fields. At present, the synthesis of polyimide mostly uses nitrogen-containing compounds such as amines, quinolines, or pyridines as catalysts. However, nitrogen-containing compounds easily react with uncyclized precursors to form salts, making it difficult to remove the catalyst. The residual catalyst will affect the film-forming properties of the polyimide and reduce the quality of the product.

### SUMMARY

In view of this, the present application provides a catalyst for synthesizing polyimide, a preparation method and application thereof, wherein the catalyst has high catalytic activity and is used in a small amount in the synthesis of polyimide, thereby not affecting the film-forming properties of the polyimide.

In a first aspect, the present application provides a catalyst for synthesizing polyimide, the structural formula of the catalyst is shown in formula (I):

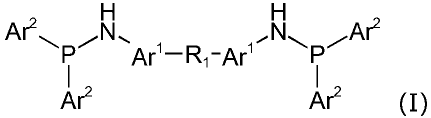

Wherein, Ar¹ and Ar² are independently selected from substituted or unsubstituted aryl group, or substituted or unsubstituted heteroaryl group, and R₁ is oxygen, sulfur, sulfone, sulfoxide, carbonyl, secondary amine, alkylene, alkenylene, alkynylene, alicyclylene group, heteroarylene group, fused polycyclic arylene group or a single bond.

In an embodiment, the substituted or unsubstituted aryl group is a substituted or unsubstituted C₆-C₃₀ aryl group.

In an embodiment, the substituted or unsubstituted heteroaryl group is a substituted or unsubstituted C₂-C₃₀ heteroaryl group.

In an embodiment, the substituted or unsubstituted alkylene is a substituted or unsubstituted C₁-C₈ alkylene.

In an embodiment, the substituted or unsubstituted alkenylene is a substituted or unsubstituted C₂-C₈ alkenylene.

In an embodiment, the substituted or unsubstituted alkynylene is a substituted or unsubstituted C₂-C₈ alkynylene.

In an embodiment, the substituted or unsubstituted alicyclylene group is a substituted or unsubstituted C₃-C₃₀ alicyclylene group.

In an embodiment, the substituted or unsubstituted heteroarylene group is a substituted or unsubstituted C₂-C₃₀ heteroarylene group.

In an embodiment, the substituted or unsubstituted fused polycylic arylene group is a substituted or unsubstituted C₁₀-C₃₀ fused polycylic arylene group.

In an embodiment, the Ar¹ and the Ar² are independently selected from substituted or unsubstituted aryl group, and the R₁ is oxygen, sulfur, sulfone, sulfoxide, carbonyl or secondary amine.

In an embodiment, the catalyst includes one of the compounds represented by formula (I-1) to formula (I-5),

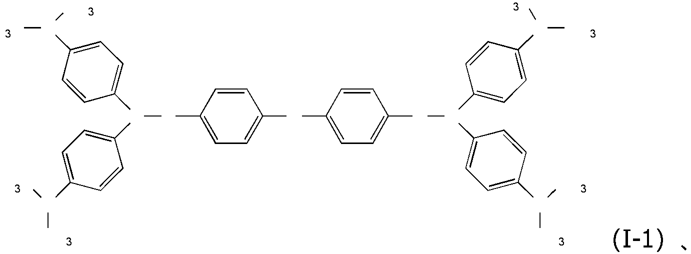

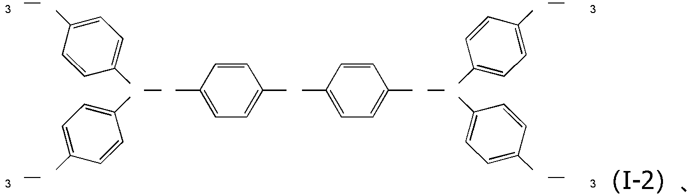

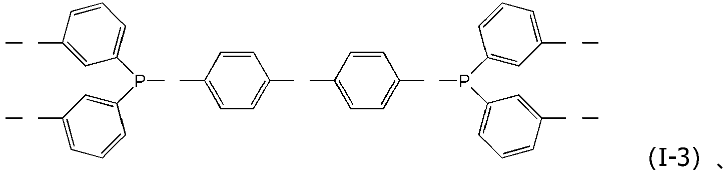

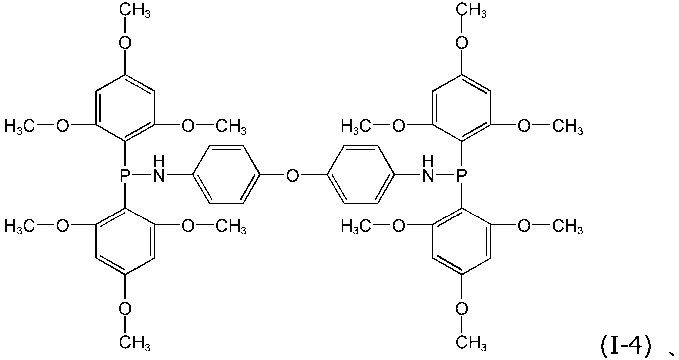

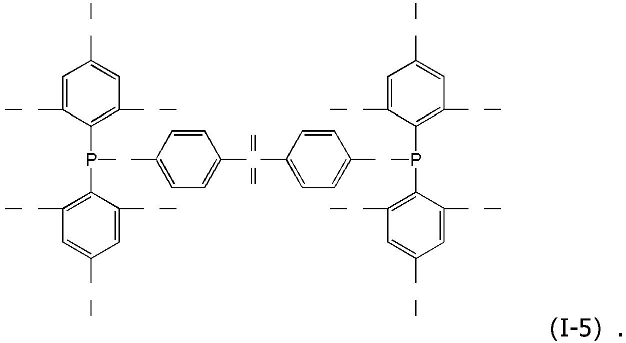

The catalyst for synthesizing polyimide provided in the present application contains phosphorus atoms, which makes the catalyst more active and is used in a smaller amount in the synthesis of polyimide, thereby not affecting the film-forming properties of the polyimide.

In a second aspect, the present application provides a method for preparing a catalyst for synthesizing polyimide, including:

A first reactant is provided, wherein the structural formula of the first reactant is shown in formula (II), wherein Ar² is selected from substituted or unsubstituted aryl group, or substituted or unsubstituted heteroaryl group,

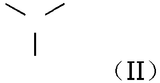

A second reactant is provided, the structural formula of the second reactant is shown in formula (III), wherein Ar¹ is selected from substituted or unsubstituted aryl group, or substituted or unsubstituted heteroaryl group, R₁ is oxygen, sulfur, sulfone, sulfoxide, carbonyl, secondary amine, alkylene, alkenylene, alkynylene, alicyclylene group, heteroarylene group, fused polycylic arylene group or single bond,

- -R- - (III) ;

The first reactant and the second reactant are mixed, and a catalyst for synthesizing polyimide is obtained after a first reaction. The structural formula of the catalyst for synthesizing polyimide is shown in formula (I):

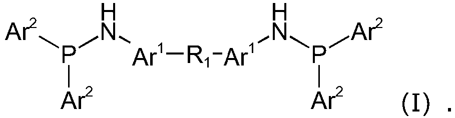

In an embodiment, the molar ratio of the first reactant to the second reactant is 2-3.

In an embodiment, the first reaction includes reacting at 25°C-150°C for 2h-48h.

In an embodiment, the preparation method of the first reactant includes: a second reaction of magnesium and Ar²-X to obtain Ar²-MgX, wherein X is a halogen; a third reaction of Ar²-MgX and diethylamine dichlorophosphorus to obtain Ar²₂P(NEt₂); and a fourth reaction of Ar²₂P(NEt₂) and phosphorus trichloride to obtain the first reactant.

Furthermore, the second reaction includes reacting at 0°C-80°C for 2h-48h.

Furthermore, the third reaction includes reacting at 0°C-30°C for 2h-18h.

Furthermore, the fourth reaction includes reacting at 60°C-80°C for 1h-10h.

Furthermore, the molar ratio of the magnesium to the Ar²-X is 1: (1-1.5).

Furthermore, the molar ratio of the phosphorus trichloride to the Ar²₂P(NEt₂) is greater than 5.

The preparation method of the catalyst for synthesizing polyimide provided in the present application is simple and easy to operate, and a catalyst with excellent activity can be prepared, which is beneficial to the synthesis of polyimide.

In a third aspect, a method for preparing polyimide is provided by the present application, includes: the catalyst for synthesizing polyimide described in the first aspect or the catalyst for synthesizing polyimide obtained by the preparation method described in the second aspect is mixed with diamine and dianhydride, and polyimide is obtained after a fifth reaction.

The preparation method of polyimide provided in the present application is simple, and polyimide can be prepared through a one-step reaction. The operation is simple, the conditions are relatively mild, and no impurity removal is required after the reaction. The product has good performance and has good application prospects.

In a fourth aspect, the present application provides a polyimide prepared by the preparation method described in the third aspect.

The polyimide provided in the present application has excellent performance and good mechanical properties after film formation, which is conducive to the use of polyimide.

### DETAILED DESCRIPTION

The technical solutions in the embodiments of the present application are described clearly and completely below. Obviously, the described embodiments are only part of the embodiments of the present application, rather than all of the embodiments. Based on the embodiments in the present application, all other embodiments obtained by person skilled in the art without creative work shall fall within the scope of protection of the present application.

The present application provides a catalyst for synthesizing polyimide, and the structural formula of the catalyst is shown in formula (I):

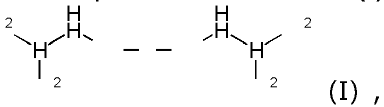

Wherein, Ar¹ and Ar² are independently selected from substituted or unsubstituted aryl group, or substituted or unsubstituted heteroaryl group, and R₁ is oxygen, sulfur, sulfone, sulfoxide, carbonyl, secondary amine, alkylene, alkenylene, alkynylene, alicyclylene group, heteroarylene group, fused polycylic arylene group or a single bond.

The catalysts currently used to synthesize polyimides, such as pyridine or quinoline catalysts, mainly react through the lone pair of electrons in the nitrogen atom. Since nitrogen belongs to the second period elements, its orbit is relatively restricted compared to the same main group elements, so the relative activity of its lone pair of electrons in the catalytic reaction is relatively weak; the catalyst provided by the present application contains phosphorus atoms, which have a more extended orbit relative to nitrogen atoms, which is beneficial to improving the reaction activity, reducing the temperature required for the reaction, and promoting the reaction to proceed under milder conditions, thereby reducing production costs and improving production efficiency. In addition, the catalyst provided in the present application has high catalytic activity, is used in a small amount in the process of the synthesizing of polyimide, and will not affect the film-forming properties of the polyimide if it is not removed, thereby facilitating the acquisition of a polyimide with excellent performance.

In the present application, Ar¹ and Ar² are independently selected from substituted or unsubstituted aryl group, or substituted or unsubstituted heteroaryl group, which means that Ar¹ is selected from substituted aryl group, unsubstituted aryl group, substituted heteroaryl group or unsubstituted heteroaryl group, and Ar² is selected from substituted aryl group, unsubstituted aryl group, substituted heteroaryl group or unsubstituted heteroaryl group. In the present application, R₁ is oxygen, sulfur, sulfone, sulfoxide, carbonyl, secondary amine, alkylene, alkenylene, alkynylene, alicyclylene group, heteroarylene group, fused polycylic arylene group or single bond.

In the present application, the aryl group is an aromatic group, which can be a monocyclic aromatic group, a polycyclic aromatic group or a fused polycylic aromatic group; a monocyclic aromatic group refers to an aromatic group with only one aromatic ring in the molecule, a polycyclic aromatic group refers to an aromatic group with two or more independent aromatic rings in the molecule, and a fused polycylic aromatic group refers to an aromatic group with two or more aromatic rings in the molecule and that are fused to each other by sharing two adjacent carbon atoms. Specifically, the aryl group may include, but is not limited to, at least one of phenyl, naphthyl, anthracenyl, naphthacene, pentacene and tetrahydronaphthyl. In the embodiment of the present application, the substituted or unsubstituted aryl group is a substituted or unsubstituted C₆-C₃₀ aryl group; that is, the number of carbon atoms of the aryl group is 6-30. Specifically, the number of carbon atoms of the aryl group can be, but is not limited to 6, 10, 13, 15, 18, 20, 23, 25, 29 or 30, etc.

In the present application, the heteroaryl group refers to an aryl group containing at least one heteroatom, including a monocyclic heteroaryl group or a fused heteroaryl group, wherein the heteroatom is selected from oxygen, sulfur or nitrogen, etc. Specifically, the heteroaryl group may include, but is not limited to, at least one of pyridyl, furyl, thienyl, indolyl, quinolyl, imidazolinyl and thiazolyl. In the embodiment of the present application, the substituted or unsubstituted heteroaryl group is a substituted or unsubstituted C₂-C₃₀ heteroaryl group; that is, the number of carbon atoms of the heteroaryl group is 2-30. Specifically, the number of carbon atoms of the heteroaryl group may be, but is not limited to 3, 5, 8, 10, 12, 15, 18, 20, 25, 27 or 30.

In the present application, the alkylene is a divalent saturated group formed by removing a hydrogen atom from an alkyl group. Specifically, the alkylene may include, but is not limited to, at least one of -CH₂-, -CH₂CH₂-, -CH₂CH₂CH₂CH₂-, - CH₂CH₂CH₂CH₂CH₂-, -CH₂CH₂CH₂CH₂CH₂CH₂-, and -CH₂CH₂CH₂CH₂CH₂CH₂CH₂CH₂-. In the embodiment of the present application, a substituted or unsubstituted alkylene is a substituted or unsubstituted C₁-C₈ alkylene; that is, the number of carbon atoms of the alkylene is 1-8. Specifically, the number of carbon atoms of the alkylene may be, but is not limited to 1, 2, 3, 4, 5, 6, 7 or 8.

In the present application, the alkenylene is a divalent unsaturated group formed by removing a hydrogen atom from an alkenyl group. Specifically, the alkenylene may include, but is not limited to, at least one of -CH=CH-, -CH=CHCH₂-, -CH₂CH=CH-, -CH=CHCH₂CH₂-, -CH₂CH₂CH=CH-, -CH₂CH=CHCH₂-, -CH=CH-CH=CH-, -CH=CHCH₂CH₂-, -CH=CH-CH=CH-, -CH=CHCH₂CH₂CH₂-, -CH=CH-CH=CH₂CH₂-, and -CH=CH₂CH₂CH=CH-. In the embodiment of the present application, the substituted or unsubstituted alkenylene is a substituted or unsubstituted C₂-C₈ alkenylene; that is, the number of carbon atoms of the alkenylene is 2-8. Specifically, the number of carbon atoms of the alkenylene may be, but is not limited to 2, 3, 4, 5, 6, 7 or 8.

In the present application, the alkynylene is a divalent unsaturated group formed by removing a hydrogen atom from an alkynyl group. Specifically, the alkynylene may include, but is not limited to, -C≡C-, -C≡CCH₂-, -CH₂C≡C-, - C≡CCH₂CH₂-, -CH₂C≡CCH₂-, -CH₂CH₂C≡C-, -C≡CC≡C-, -C≡CCH₂CH₂CH₂-, - CH₂C≡CCH₂CH₂- , -CH₂CH₂C≡CCH₂-, -CH₂C≡CC≡C-CH₂-, -C≡CCH₂CH₂CH₂-, - CH₂CH₂C≡CCH₂-, -CH₂C≡CC≡C-CH₂-, -C≡CCH₂CH₂CH₂CH₂-, -CH₂C≡CCH₂CH₂- , - CH₂CH₂C≡CCH₂CH₂-, -CH₂CH₂C≡CCH₂-, and -CH₂CH₂CH₂CH₂C≡C-. In the embodiment of the present application, the substituted or unsubstituted alkynylene is a substituted or unsubstituted C₂-C₈ alkynylene; that is, the number of carbon atoms of the alkynylene is 2-8. Specifically, the number of carbon atoms of the alkynylene may be, but is not limited to 2, 3, 4, 5, 6, 7 or 8.

In the present application, the alicyclylene group is a divalent alicyclic group. Specifically, the alicyclylene group may include, but is not limited to, at least one of cyclopropylene group, cyclobutylene group, cyclopentylene group, cyclohexylene group and cyclopentenylene group. In the embodiment of the present application, the substituted or unsubstituted alicyclylene group is a substituted or unsubstituted C₃-C₃₀ alicyclylene group; that is, the number of carbon atoms of the alicyclylene group is 3-30. Specifically, the number of carbon atoms of the alicyclylene group may be, but is not limited to 3, 5, 9, 10, 13, 15, 18, 23, 26 or 30.

In the present application, the heteroarylene group is a divalent heteroaryl group. Specifically, the heteroarylene group may include, but is not limited to, at least one of pyridylene group, furylene group, thienylene group, indolylene group, quinolylene group, imidazolinylene group, and thiazolylene group. In the embodiment of the present application, the substituted or unsubstituted heteroarylene group is a substituted or unsubstituted C₂-C₃₀ heteroarylene group; that is, the number of carbon atoms in the heteroarylene group is 2-30. Specifically, the number of carbon atoms in the heteroarylene group may be, but is not limited to 3, 5, 8, 12, 17, 20, 25, 28 or 30.

In the present application, the fused polycyclic arylene group is a divalent fused polycyclic aryl group. Specifically, the fused polycyclic arylene group may include, but is not limited to, at least one of naphthylene group, anthrylene group, tetraphenylene group, and pentphenylene group. In the embodiment of the present application, the substituted or unsubstituted fused polycyclic arylene group is a substituted or unsubstituted C₁₀-C₃₀ fused polycyclic arylene group; that is, the number of carbon atoms of the fused polycyclic arylene group is 10-30. Specifically, the number of carbon atoms of the fused polycyclic arylene group may be, but is not limited to 10, 15, 18, 20, 25, 28, or 30.

In the present application, a substituted group (such as aryl group, heteroaryl group, alkylene, alkenylene, alkynylene, alicyclylene group, heteroarylene group, and fused polycyclic arylene group) refers to a group substituted by a substituent. In one embodiment, the substituent includes at least one of halogen, nitrogen atom, oxygen atom, sulfur atom, hydroxyl, nitro, amine, thiol, methoxy, and cyano.

In one embodiment of the present application, Ar¹ and Ar² are independently selected from substituted or unsubstituted aryl group, and R₁ is oxygen, sulfur, sulfone, sulfoxide, carbonyl or secondary amine. This is beneficial to improving the synthesis efficiency of the catalyst. In one embodiment, Ar¹ and Ar² are the same groups. In another embodiment, Ar¹ and Ar² are different groups. In one embodiment of the present application, the catalyst includes one of the compounds represented by formula (I-1) to formula (I-5),

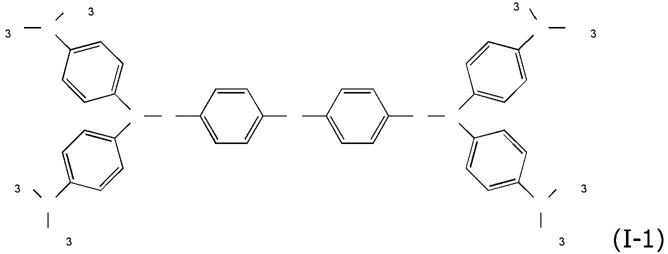

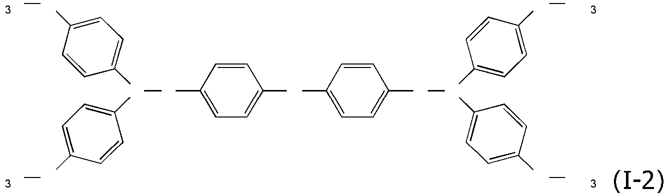

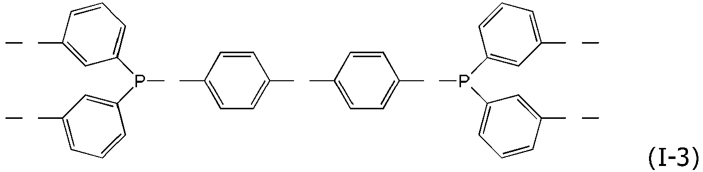

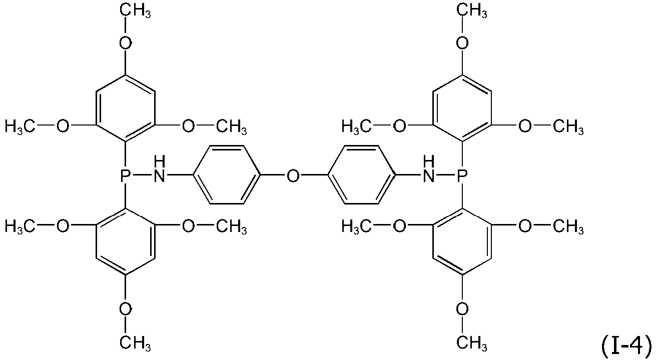

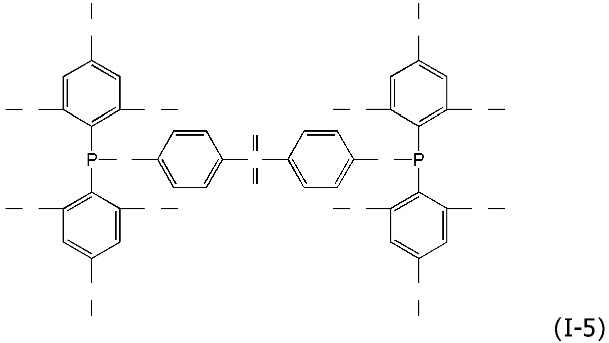

The present application also provides a method for preparing a catalyst for synthesizing polyimide, including:

A first reactant is provided, the structural formula of the first reactant is shown in formula (II), wherein Ar² is selected from substituted or unsubstituted aryl group, or substituted or unsubstituted heteroaryl group,

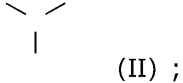

A second reactant is provided, the structural formula of the second reactant is shown in formula (III), wherein Ar¹ is selected from substituted or unsubstituted aryl group, or substituted or unsubstituted heteroaryl group, R₁ is oxygen, sulfur, sulfone, sulfoxide, carbonyl, secondary amine, alkylene, alkenylene, alkynylene, alicyclylene group, heteroarylene group, fused polycylic arylene group or single bond,

- -R- - (III)

The first reactant and the second reactant are mixed, and a catalyst for synthesizing polyimide is obtained after a first reaction. The structural formula of the catalyst for synthesizing polyimide is shown in formula (I):

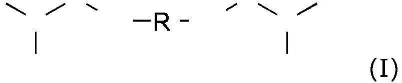

The preparation method of the catalyst for synthesizing polyimide provided in the present application is simple and easy to operate, and a catalyst with excellent activity can be prepared, which is beneficial to the synthesis of polyimide.

In one embodiment of the present application, the preparation method of the first reactant includes: magnesium and Ar²-X undergo a second reaction to obtain Ar²-MgX, wherein X is a halogen; Ar²-MgX and diethylamine dichlorophosphorus undergo a third reaction to obtain Ar²₂P(NEt₂); Ar²₂P(NEt₂) and phosphorus trichloride undergo a fourth reaction to obtain the first reactant. It can be understood that X in Ar²-X is a halogen, and Et in Ar²₂P(NEt₂) represents an ethyl group.

In one embodiment of the present application, the molar ratio of magnesium to Ar²-X is 1: (1-1.5), which is conducive to the second reaction and does not produce by-products. Specifically, the molar ratio of magnesium to Ar²-X may be but is not limited to 1:1, 1:1.1, 1:1.2, 1:1.3, 1:1.4 or 1:1.5, etc. In one embodiment, the molar ratio of magnesium to Ar²-X is 1:(1-1.2). In another embodiment, the molar ratio of magnesium to Ar²-X is 1:(1.2-1.5). In another embodiment of the present application, the second reaction includes reacting at 0°C-80°C for 2h-48h. Specifically, the reaction temperature of the second reaction may be, but is not limited to 0°C, 10°C, 20°C, 30°C, 40°C, 50°C, 60°C, 70°C or 80°C, etc. and the reaction time of the second reaction may be, but is not limited to 2h, 5h, 10h, 20h, 28h, 30h, 35h, 40h, 42h, 45h or 48h, etc. In one embodiment, the second reaction includes reacting at 0°C-20°C for 2h-25h. In another embodiment, the second reaction includes reacting at 50°C-80°C for 2h-20h. In yet another embodiment, the second reaction includes reacting at 20°C-50°C for 5h-30h. In yet another embodiment of the present application, the second reaction is carried out under the action of an initiator, which is conducive to the rapid progress of the second reaction. Specifically, the initiator may include, but is not limited to, at least one of elemental iodine, 1,2-dibromoethane and Grignard reagent. In yet another embodiment of the present application, the reaction solvent of the second reaction may include at least one of tetrahydrofuran and diethyl ether.

In one embodiment of the present application, the molar ratio of diethylamine dichlorophosphorus to Ar²-X is 0.3-1. Specifically, the molar ratio of diethylamine dichlorophosphorus to Ar²-X can be, but is not limited to 0.3, 0.4, 0.5, 0.6, 0.7, 0.8, 0.9 or 1, etc. In one embodiment, the molar ratio of diethylamine dichlorophosphorus to Ar²-X is 0.5. In another embodiment of the present application, the third reaction includes 0°C-30°C for 2h-18h. Specifically, the reaction temperature of the third reaction can be, but not limited to 0°C, 10°C, 15°C, 20°C, 25°C or 30°C, etc. and the reaction time of the third reaction can be, but not limited to 2h, 5h, 10h, 12h, 15h, 17h or 18h, etc. In one embodiment, the third reaction includes reacting at 0°C-20°C for 10h-18h. In another embodiment of the present application, after the third reaction, saturated ammonium chloride can be used for quenching, and ethyl acetate can be used for extraction. The organic phase can be dried over saturated sodium sulfate and concentrated using a rotary evaporator, and then vacuum dried to obtain Ar²₂P(NEt₂).

In one embodiment of the present application, the molar ratio of phosphorus trichloride to Ar²₂P(NEt₂) is greater than 5, thereby ensuring an excess of phosphorus trichloride and futher ensuring that Ar²₂P(NEt₂) can react completely. In another embodiment of the present application, the fourth reaction includes reacting at 60°C-80°C for 1h-10h. Specifically, the reaction temperature of the fourth reaction may be, but not limited to 60°C, 62°C, 65°C, 70°C, 73°C, 75°C, 77°C or 80°C, etc. and the reaction time of the fourth reaction may be, but not limited to 1h, 2h, 5h, 7h, 8h or 10h, etc. In yet another embodiment of the present application, the fourth reaction is carried out under an inert atmosphere. Specifically, it may be, but not limited to, carried out under a nitrogen atmosphere. In another embodiment of the present application, after the fourth reaction, phosphorus trichloride and by-products produced in the reaction may be removed by vacuum distillation to obtain the first reactant.

In one embodiment of the present application, the second reactant may include at least one of 4,4'-diaminodiphenyl ether, 4,4'-diaminodiphenyl sulfone, N,N-bis(4-aminophenyl)-1,4-phenylenediamine and 9,9-bis(4-aminophenyl)fluorene.

In one embodiment of the present application, the molar ratio of the first reactant to the second reactant is 2-3, which is conducive to ensuring sufficient reaction. Specifically, the molar ratio of the first reactant to the second reactant may be, but is not limited to 2:1, 2.2:1, 2.5:1, 2.8:1, 2.9:1 or 3:1, etc. In one embodiment of the present application, the first reaction includes reacting at 25°C-150°C for 2h-48h. Specifically, the reaction temperature of the first reaction may be, but is not limited to 25°C, 40°C, 50°C, 65°C, 80°C, 100°C, 125°C or 150°C, etc. and the reaction time of the first reaction may be, but is not limited to 2h, 5h, 10h, 18h, 25h, 36h, 40h or 48h, etc. In one embodiment, the first reaction includes reacting at 25°C-130°C for 2h-48h. In another embodiment, the first reaction includes reacting at 80°C-130°C for 10h-48h. In another embodiment of the present application, after the first reaction, ethyl acetate is used for extraction, the organic phase is dried over saturated sodium sulfate and then concentrated using a rotary evaporator, and the catalyst can be obtained after recrystallization with ethyl acetate and n-hexane.

The present application also provides a method for preparing polyimide, including that the catalyst of any of the above embodiments is mixed with diamine and dianhydride, and polyimide is obtained after a fifth reaction.

In one embodiment of the present application, the diamine includes at least one of o-phenylenediamine, m-phenylenediamine, p-phenylenediamine, 4,4'-diaminodiphenyl ether, 4,4'-diaminodiphenyl sulfone, 1,3-diamino-2-methylpropane, N,N-bis(4-aminophenyl)-1,4-phenylenediamine, and 9,9-bis(4-aminophenyl)fluorene. In the present application, the diamine and the two phosphorus skeletons in the catalyst have similar structures, which is conducive to molecular stacking and helps to improve the mechanical properties of the polyimide.

In one embodiment of the present application, the dianhydride includes at least one of pyromellitic anhydride, 2,3,3',4'-diphenyl ether tetracarboxylic anhydride, 3,3',4,4'-tetracarboxybenzophenone dianhydride, 3,3',4,4'-tetracarboxybiphenyl sulfone dianhydride, 2,2-bis(3,4-dicarboxyphenyl)hexafluoropropane dianhydride, 4,4'-bis(3,4-dicarboxyphenoxy)diphenyl ether dianhydride, 4,4'-bis(3,4-dicarboxyphenoxy)benzophenone dianhydride, 4,4'-bis(3,4-dicarboxyphenoxy)diphenylmethane dianhydride and 4,4'-bis(3,4-dicarboxyphenoxy)diphenyl sulfone dianhydride.

In one embodiment of the present application, the molar ratio of diamine, dianhydride and catalyst is (0.95-1.05):1: (0.0001-0.1). This is conducive to the rapid preparation of polyimide. The catalyst provided in the present application has high reactivity, and only a small amount (as low as 100ppm) needs to be added in the preparation of polyimide to play an effective catalytic role, which not only ensures the preparation of polyimide, but also does not affect the film-forming properties of polyimide, and is beneficial to the use of polyimide. Specifically, the molar ratio of diamine, dianhydride and catalyst can be, but is not limited to, 0.95:1:0.001, 1:1:0.05, 0.98:1:0.0001, 1.01:1:0.07, 1.03:1:0.0045, etc. In one embodiment, (0.95-1.05):1:(0.0001-0.001). In another embodiment, (0.95-1.05):1:(0.001-0.01). In yet another embodiment, (0.95-1.05):1:(0.01-0.1).

In one embodiment of the present application, the reaction solvent of the fifth reaction may include at least one of dimethyl sulfoxide, N-methylpyrrolidone, N,N-dimethylformamide and N,N-dimethylacetamide. In one embodiment of the present application, the molar ratio of the diamine, the dianhydride, the catalyst, and the reaction solvent of the fifth reaction may be (0.95-1.05):1:(0.0001-0.1):(25-200). In one embodiment, the molar ratio of the diamine, the dianhydride, the catalyst, and the reaction solvent of the fifth reaction may be (0.95-1.05):1:(0.0001-0.1):(25-85). In another embodiment, the molar ratio of the diamine, the dianhydride, the catalyst, and the reaction solvent of the fifth reaction may be (0.95-1.05):1:(0.0001-0.1):(50-150). In yet another embodiment, the molar ratio of the diamine, the dianhydride, the catalyst, and the reaction solvent of the fifth reaction may be (0.95-1.05):1:(0.0001-0.1):(75-120).

In one embodiment of the present application, the fifth reaction includes reacting at 60°C-180°C for 1h-48h. Specifically, the reaction temperature of the fifth reaction may be, but is not limited to 60°C, 70°C, 95°C, 120°C, 140°C, 150°C, 160°C or 180°C, etc. and the reaction time of the fifth reaction may be, but is not limited to 2h, 5h, 10h, 18h, 25h, 36h, 40h or 48h, etc. In one embodiment, the fifth reaction includes reacting at 60°C-120°C for 5h-42h. In another embodiment, the fifth reaction includes reacting at 85°C-150°C for 1h-38h.

In one embodiment of the present application, the diamine, the catalyst and the reaction solvent of the fifth reaction can be added to the reactor, and stirred and mixed evenly at -20°C-25°C; then the dianhydride is slowly added to the reactor, the temperature is raised to 60°C-180°C, and the reaction is carried out for 1h-48h; after the reaction liquid is cooled to room temperature, a polar solvent is added to the reaction system, and the polyimide is obtained after filtering and drying. In one embodiment, the polar solvent includes at least one of methanol, ethanol and water.

The present application also provides a polyimide, which is prepared by the above-mentioned method for preparing the polyimide. The polyimide has good film-forming properties and excellent mechanical properties, which is beneficial for its use.

The technical solution of the present application is further illustrated below through specific embodiments and comparative examples.

### Example 1

Under the action of iodine initiator, with tetrahydrofuran as solvent, magnesium metal and 4-chloro-N,N-dimethylaniline (molar ratio of 1:1) were reacted at 45°C for 6 hours, the solution was cooled to 0°C, and diethylamine dichlorophosphorus (molar ratio of diethylamine dichlorophosphorus to 4-chloro-N,N-dimethylaniline was 0.5) was added dropwise to the solution, stirred for 18 hours, quenched with saturated ammonium chloride, and then extracted with ethyl acetate, the organic phase was dried over saturated sodium sulfate and concentrated using a rotary evaporator, after vacuum drying, it was reacted with excess phosphorus trichloride under nitrogen protection, after the reaction was refluxed for 2 hours, the phosphorus trichloride and its by-products were removed by reduced pressure distillation to obtain

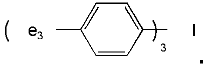

The above product and 4,4'-diaminodiphenyl ether (molar ratio 2:1) were stirred in tetrahydrofuran at 25°C for 48 hours, then extracted with ethyl acetate, the organic phase was dried over saturated sodium sulfate and concentrated using a rotary evaporator, and recrystallized with ethyl acetate and n-hexane to obtain a catalyst for synthesizing polyimide. The structural formula of the catalyst for synthesizing polyimide was shown in formula (I-1).

### Example 2

Under the action of 1,2-dibromoethane initiator, with tetrahydrofuran as solvent, magnesium metal and 4-bromoanisole (molar ratio is 1:1) were reacted at 80°C for 18 hours, the solution is cooled to 0°C, and diethylamine dichlorophosphorus (molar ratio of diethylamine dichlorophosphorus to 4-bromoanisole was 0.5) was added dropwise to the solution, stirred for 12 hours, quenched with saturated ammonium chloride, and then extracted with ethyl acetate, the organic phase was dried over saturated sodium sulfate and concentrated using a rotary evaporator, after vacuum drying, it was reacted with excess phosphorus trichloride under nitrogen protection, after the reaction was refluxed for 2 hours, phosphorus trichloride and its by-products were removed by reduced pressure distillation to obtain

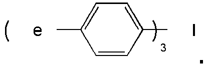

The above product and 4,4'-diaminodiphenyl ether (molar ratio 2:1) were stirred in toluene at 25°C for 2 hours, then extracted with ethyl acetate, the organic phase was dried over saturated sodium sulfate and concentrated using a rotary evaporator, and recrystallized with ethyl acetate and n-hexane to obtain a catalyst for synthesizing polyimide. The structural formula of the catalyst for synthesizing polyimide was shown in formula (I-2).

### Example 3

Under the action of iodine initiator, with ether as solvent, magnesium metal and m-bromoanisole (molar ratio of 1:1) were reacted at 0°C for 2h, the solution was cooled to 0°C, and diethylamine dichlorophosphorus (molar ratio of diethylamine dichlorophosphorus to m-bromoanisole was 0.5) was added dropwise to the solution, stirred for 18h, quenched with saturated ammonium chloride, and then extracted with ethyl acetate, the organic phase was dried over saturated sodium sulfate and concentrated using a rotary evaporator, after vacuum drying, it was reacted with excess phosphorus trichloride under nitrogen protection, after the reaction was refluxed for 2 hours, phosphorus trichloride and its by-products were removed by reduced pressure distillation to obtain

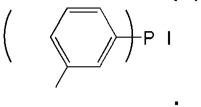

The above product and 4,4'-diaminodiphenyl ether (molar ratio 2:1) were stirred in tetrahydrofuran at 80°C for 48 hours, then extracted with ethyl acetate, the organic phase was dried over saturated sodium sulfate and concentrated using a rotary evaporator, and recrystallized with ethyl acetate and n-hexane to obtain a catalyst for synthesizing polyimide. The structural formula of the catalyst for synthesizing polyimide was shown in formula (I-3).

### Example 4

Under the action of iodine initiator, with tetrahydrofuran as solvent, magnesium metal and 1-bromo-2,4,6-trimethoxybenzene (molar ratio of 1:1) were reacted at 0°C for 2h, the solution was cooled to 0°C, and diethylamine dichlorophosphorus (molar ratio of diethylamine dichlorophosphorus to 1-bromo-2,4,6-trimethoxybenzene was 0.5) was added dropwise to the solution, stirred for 15h, quenched with saturated ammonium chloride, and then extracted with ethyl acetate, the organic phase was dried over saturated sodium sulfate and concentrated using a rotary evaporator, after vacuum drying, it was reacted with excess phosphorus trichloride under nitrogen protection, after the reaction was refluxed for 2h, the phosphorus trichloride and its by-products were removed by reduced pressure distillation to obtain

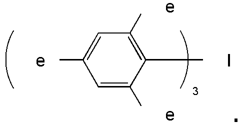

The above product and 4,4'-diaminodiphenyl ether (molar ratio 2:1) were stirred in xylene at 130°C for 48 hours, then extracted with ethyl acetate, the organic phase was dried over saturated sodium sulfate and concentrated using a rotary evaporator, and recrystallized with ethyl acetate and n-hexane to obtain a catalyst for synthesizing polyimide. The structural formula of the catalyst for synthesizing polyimide was shown in formula (I-4).

### Example 5

Under the action of iodine initiator, with tetrahydrofuran as solvent, magnesium metal and 1-bromo-2,4,6-trimethoxybenzene (molar ratio of 1:1) were reacted at 0°C for 2h, the solution was cooled to 0°C, and diethylamine dichlorophosphorus (molar ratio of diethylamine dichlorophosphorus to 1-bromo-2,4,6-trimethoxybenzene was 0.5) was added dropwise to the solution, stirred for 15h, quenched with saturated ammonium chloride, and then extracted with ethyl acetate, the organic phase was dried over saturated sodium sulfate and concentrated using a rotary evaporator, after vacuum drying, it was reacted with excess phosphorus trichloride under nitrogen protection, after the reaction was refluxed for 2h, the phosphorus trichloride and its by-products are removed by reduced pressure distillation to obtain

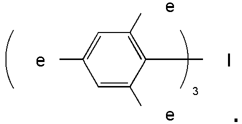

The above product and 4,4'-diaminodiphenyl sulfone (molar ratio 2:1) were stirred in xylene at 80°C for 48 hours, then extracted with ethyl acetate, the organic phase was dried over saturated sodium sulfate and concentrated using a rotary evaporator, and recrystallized with ethyl acetate and n-hexane to obtain a catalyst for synthesizing polyimide. The structural formula of the catalyst for synthesizing polyimide was shown in formula (I-5).

### Example 6

4g 4,4'-diaminodiphenyl ether, 0.0015g of the catalyst prepared in Example 1 and 190g N-methylpyrrolidone were sequentially put into the reaction kettle, stirring was started and the temperature was lowered to 0°C; then 6.44g 3,3',4,4'-benzophenonetetracarboxylic dianhydride was slowly added into the kettle; the reaction kettle was heated to 120°C, stirred for 36 hours, cooled to room temperature and methanol was added, filtered and dried to obtain a polyimide solid.

### Example 7

4g 4,4'-diaminodiphenyl ether, 0.0014g of the catalyst prepared in Example 2 and 190g N-methylpyrrolidone were sequentially put into the reaction kettle, stirring was started and the temperature was lowered to 0°C; then 6.44g 3,3',4,4'-benzophenonetetracarboxylic dianhydride was slowly added into the kettle; the reaction kettle was heated to 120°C, stirred for 36 hours, cooled to room temperature and methanol was added, filtered and dried to obtain a polyimide solid.

### Example 8

4g 4,4'-diaminodiphenyl ether, 0.0014g of the catalyst prepared in Example 3 and 190g N-methylpyrrolidone were sequentially put into the reaction kettle, stirring was started and the temperature was lowered to 0°C; then 6.44g 3,3',4,4'-benzophenonetetracarboxylic dianhydride was slowly added into the kettle; the reaction kettle was heated to 120°C, stirred for 36 hours, cooled to room temperature and methanol was added, filtered and dried to obtain a polyimide solid.

### Example 9

4g 4,4'-diaminodiphenyl ether, 0.0019g of the catalyst prepared in Example 4 and 190g N-methylpyrrolidone were sequentially put into the reaction kettle, stirring was started and the temperature was lowered to 0°C; then 6.44g 3,3',4,4'-benzophenonetetracarboxylic dianhydride was slowly added into the kettle; the reaction kettle was heated to 120°C, stirred for 36 hours, cooled to room temperature and methanol was added, filtered and dried to obtain a polyimide solid.

### Example 10

4g of 4,4'-diaminodiphenyl ether, 0.002g of the catalyst prepared in Example 5 and 190g N-methylpyrrolidone were sequentially put into the reaction kettle, stirring was started and the temperature was lowered to 0°C; then 6.44g of 3,3',4,4'-benzophenonetetracarboxylic dianhydride was slowly added into the kettle; the reaction kettle was heated to 120°C, stirred for 36 hours, cooled to room temperature and methanol was added, filtered and dried to obtain a polyimide solid.

### Comparative Example 1

4g 4,4'-diaminodiphenyl ether, 0.0015g isoquinoline and 190g N-methylpyrrolidone were sequentially put into the reaction kettle, stirring was started and the temperature was lowered to 0°C; then 6.44 g 3,3',4,4'-benzophenonetetracarboxylic dianhydride was slowly added into the kettle; the reaction kettle was heated to 120°C, stirred for 36 hours, cooled to room temperature and methanol was added, filtered and dried to obtain a polyimide solid.

### Comparative Example 2

4g 4,4'-diaminodiphenyl ether, 0.15g isoquinoline and 190g N-methylpyrrolidone were sequentially put into the reaction kettle, stirring was started and the temperature was lowered to 0°C; then 6.44 g 3,3',4,4'-benzophenonetetracarboxylic dianhydride was slowly added into the kettle; the reaction kettle was heated to 120°C, stirred for 36 hours, cooled to room temperature and methanol was added, filtered and dried to obtain a polyimide solid.

### Performance Testing

The structures of the catalysts obtained in Examples 1-5 and the polyimide obtained in Comparative Example 1 were characterized by nuclear magnetic resonance, and the obtained hydrogen nuclear magnetic resonance spectrum results were:

Example 1: 1H NMR (500MHz, Chloroform-d) δ7.35-7.29 (m, 2H), 6.94-6.88 (m, 1H), 6.88-6.82 (m, 1H), 6.72-6.64 (m, 2H), 2.98 (s, 4H).

Example 2: 1H NMR (500MHz, Chloroform-d) δ7.49-7.42 (m, 1H), 6.94-6.82 (m, 2H), 3.83 (s, 1H).

Example 3: 1H NMR (500 MHz, Chloroform-d) δ7.25 (td, J = 8.2, 7.5Hz, 1H), 7.17-7.11 (m, 1H), 6.94 (td, J = 2.1, 1.3Hz, 1H), 6.94-6.88 (m, 1H), 6.88-6.81 (m, 2H), 3.82 (s, 2H).

Example 4: 1H NMR (500MHz, Chloroform-d) δ6.94-6.88 (m, 1H), 6.88-6.82 (m, 1H), 6.26 (s, 1H), 3.83 (d, J = 16.3Hz, 7H).

Example 5: 1H NMR (500MHz, Chloroform-d) δ7.82-7.76 (m, 1H), 7.13-7.07 (m, 1H), 6.26 (s, 1H), 3.83 (d, J = 16.3Hz, 7H).

Comparative Example 1: 1H NMR (500 MHz, THF-d8) δ8.48 (d, J=1.7Hz, 1H), 8.39 (d, 2H), 8.24 (d, 1H), 8.15 (ddd, 3H), 8.04 (d, 2H), 7.45-7.39 (m, 4H), 7.15-7.09 (m, 4H).

The degree of cyclization of the products obtained in Examples 6-10 and Comparative Examples 1-2 was tested by 1H NMR (500MHz, DMSO-d6). The uncyclized chemical shift was 7.94ppm, the cyclized chemical shift was 8.24ppm, and the degree of cyclization = cyclized chemical shift integral / (uncyclized chemical shift integral + cyclized chemical shift integral). The test results are shown in Table 1.

The polyimides prepared in Examples 6-9 and Comparative Examples 1-2 were dissolved in an organic solvent and formed into a film by roller coating or blade coating; the polyimide prepared in Example 10 was formed into a film by hot pressing with a hot roller. After film formation, the film was cut into a dumbbell shape using a film tool, the edge of the sample must be smooth and without gaps, used a low-power magnifying glass to inspect the sample and discard the sample with defective edges. According to GB 13022-91, a tensile testing machine was used to stretch the sample at a constant speed, after the sample broke, the required load and the corresponding elongation between the markings were read, and the elongation at break was calculated. The test results are shown in Table 1.

**Table 1 Test results**

| | the degree of cyclization /% | the elongation at break /% |
|---|---|---|
| Example 6 | 68 | 32 |
| Example 7 | 72 | 34 |
| Example 8 | 59 | 32 |
| Example 9 | 94 | 31 |
| Example 10 | 89 | 30 |
| Comparative Example 1 | 38 | 33 |
| Comparative Example 2 | 65 | 16 |

It can be seen from Table 1 that compared with the polyimide prepared in Comparative Examples 1-2, the polyimide synthesized using the catalyst prepared in Examples 1-5 has a higher degree of cyclization, wherein the degree of cyclization of the polyimide in Example 9 is as high as 94%; at the same time, a large amount of catalyst was added to Comparative Example 2 to improve the cyclization effect of the polyimide, but the residual catalyst affected the elongation at break of the polyimide, while the polyimide synthesized using the catalyst prepared in Examples 1-5 has a high elongation at break. It can be seen that the catalyst provided in the present application has high activity and a small amount, and even if it is not removed, it will not affect the film-forming properties of the polyimide, which is beneficial to the use of polyimide.

The above-described embodiments are merely several implementations of the present application, and their descriptions are specific and detailed, but should not be construed as limiting the patent scope of the present application. It should be pointed out that, for person skilled in the art, various modifications and improvements can be made without departing from the concept of the present application, and all such modifications and improvements shall fall within the protection scope of the present application. Therefore, the protection scope of the present application should be based on the attached claims.

## Claims

1. A catalyst for synthesizing polyimide, the structural formula of the catalyst is shown in formula (I): 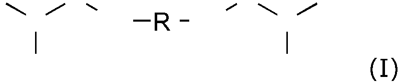 Wherein, Ar¹ and Ar² are independently selected from substituted or unsubstituted aryl group, or substituted or unsubstituted heteroaryl group, and R₁ is oxygen, sulfur, sulfone, sulfoxide, carbonyl, secondary amine, alkylene, alkenylene, alkynylene, alicyclylene group, heteroarylene group, fused polycyclic arylene group or a single bond.

2. The catalyst according to claim 1, wherein the substituted or unsubstituted aryl group is a substituted or unsubstituted C₆-C₃₀ aryl group.

3. The catalyst according to claim 1, wherein the substituted or unsubstituted heteroaryl group is a substituted or unsubstituted C₂-C₃₀ heteroaryl group.

4. The catalyst according to claim 1, wherein the substituted or unsubstituted alkylene is a substituted or unsubstituted C₁-C₈ alkylene.

5. The catalyst according to claim 1, wherein the substituted or unsubstituted alkenylene is a substituted or unsubstituted C₂-C₈ alkenylene.

6. The catalyst according to claim 1, wherein the substituted or unsubstituted alkynylene is a substituted or unsubstituted C₂-C₈ alkynylene.

7. The catalyst according to claim 1, wherein the substituted or unsubstituted alicyclylene group is a substituted or unsubstituted C₃-C₃₀ alicyclylene group.

8. The catalyst according to claim 1, wherein the substituted or unsubstituted heteroarylene group is a substituted or unsubstituted C₂-C₃₀ heteroarylene group.

9. The catalyst according to claim 1, wherein the substituted or unsubstituted fused polycyclic arylene group is a substituted or unsubstituted C₁₀-C₃₀ fused polycyclic arylene group.

10. The catalyst according to claim 1, wherein Ar¹ and Ar² are independently selected from substituted or unsubstituted aryl group, and R₁ is oxygen, sulfur, sulfone, sulfoxide, carbonyl or secondary amine.

11. The catalyst according to claim 10, wherein the catalyst comprises one of the compounds represented by formula (I-1) to formula (I-5),

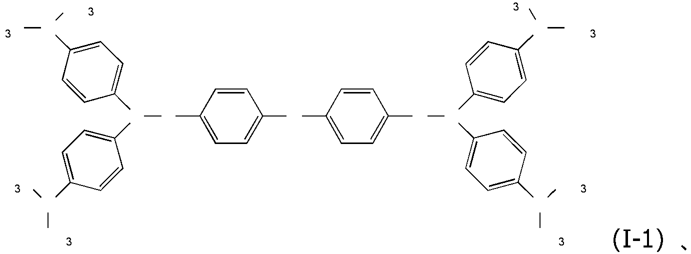

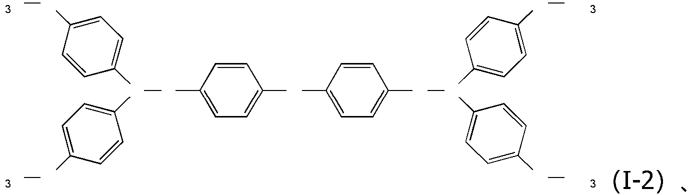

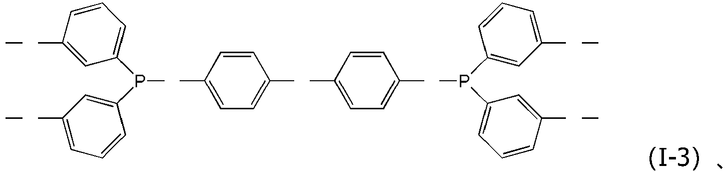

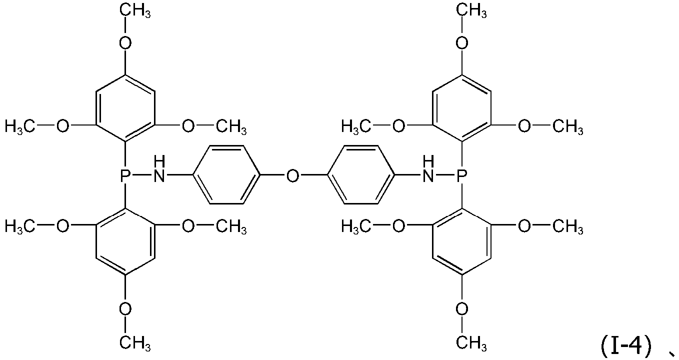

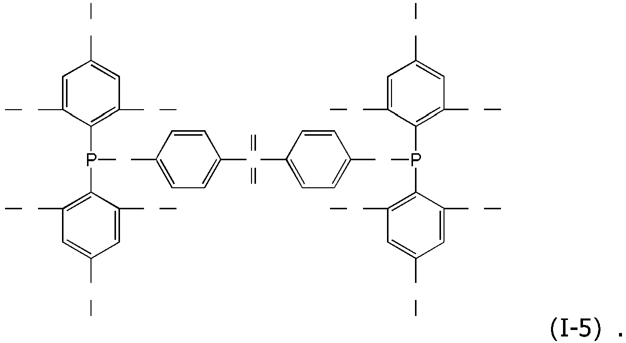

12. A method for preparing a catalyst for synthesizing polyimide, comprising:
A first reactant is provided, wherein the structural formula of the first reactant is shown in formula (II), wherein Ar² is selected from substituted or unsubstituted aryl group, or substituted or unsubstituted heteroaryl group, 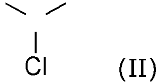
A second reactant is provided, the structural formula of the second reactant is shown in formula (III), wherein Ar¹ is selected from substituted or unsubstituted aryl group, or substituted or unsubstituted heteroaryl group, R₁ is oxygen, sulfur, sulfone, sulfoxide, carbonyl, secondary amine, alkylene, alkenylene, alkynylene, licyclylene group, heteroarylene group, fused polycyclic arylene group or single bond,
- -R- - (III)
The first reactant and the second reactant are mixed, and a catalyst for synthesizing polyimide is obtained after a first reaction. The structural formula of the catalyst for synthesizing polyimide is shown in formula (I):

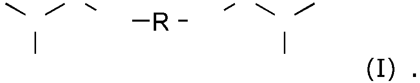

13. The preparation method according to claim 12, wherein the molar ratio of the first reactant to the second reactant is 2-3.

14. The preparation method according to claim 12 or 13, wherein the first reaction comprises reacting at 25°C-150°C for 2h-48h.

15. The preparation method according to any one of claims 12 to 14, wherein the preparation method of the first reactant comprises:
Magnesium and Ar²-X undergo a second reaction to obtain Ar²-MgX, wherein X is halogen;
Ar²-MgX and diethylamine dichlorophosphorus undergo a third reaction to obtain Ar²₂P(NEt₂);
Ar²₂P(NEt₂) and phosphorus trichloride undergo a fourth reaction to obtain the first reactant.

16. The preparation method according to claim 15, wherein the second reaction comprises reacting at 0°C-80°C for 2h-48h, and the molar ratio of the magnesium to the Ar²-X is 1:(1-1.5).

17. The preparation method according to claim 15 or 16, wherein the third reaction comprises a reaction at 0°C-30°C for 2h-18h; and the fourth reaction comprises a reaction at 60°C-80°C for 1h-10h, and the molar ratio of the phosphorus trichloride to the Ar²₂P(NEt₂) is greater than 5.

18. A method for preparing polyimide, comprising:
The catalyst for synthesizing polyimide according to any one of claims 1 to 11 or the catalyst for synthesizing polyimide obtained by the preparation method according to any one of claims 12 to 17 is mixed with diamine and dianhydride, and polyimide is obtained after a fifth reaction.

19. The method for preparing a polyimide according to claim 18, wherein the molar ratio of the diamine, the dianhydride and the catalyst is (0.95-1.05):1:(0.0001-0.1);
The fifth reaction comprises reacting at 60°C-180°C for 1 h-48 h.

20. A polyimide, it is prepared by the preparation method described in claim 18 or 19.
